(19) Europäisches Patentamt / European Patent Office / Office européen des brevets

(11) **EP 4 546 158 A1**

(12) **EUROPEAN PATENT APPLICATION**
published in accordance with Art. 153(4) EPC

(43) Date of publication:
**30.04.2025 Bulletin 2025/18**

(21) Application number: **22951930.1**

(22) Date of filing: **19.07.2022**

(51) International Patent Classification (IPC):
**G06F 16/33** (2025.01)

(52) Cooperative Patent Classification (CPC):
**G06F 16/33**

(86) International application number:
**PCT/JP2022/028113**

(87) International publication number:
**WO 2024/018541 (25.01.2024 Gazette 2024/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NIPPON TELEGRAPH AND
TELEPHONE CORPORATION**
**Chiyoda-ku, Tokyo 100-8116 (JP)**

(72) Inventor: **YAMADA, Masanori**
**Musashino-shi, Tokyo 180-8585 (JP)**

(74) Representative: **Hoffmann Eitle**
**Patent- und Rechtsanwälte PartmbB**
**Arabellastraße 30**
**81925 München (DE)**

(54) **INFORMATION PROCESSING DEVICE, INFORMATION PROCESSING METHOD, AND INFORMATION PROCESSING PROGRAM**

(57) An information processing device (100) includes an acquisition unit (121), a vector conversion unit (122), a measurement unit (123), a selection unit (124), and an execution unit (125). The acquisition unit (121) is configured to acquire a first character string input by a user and a second character string indicating a skill. The vector conversion unit (122) is configured to convert the first character string and the second character string acquired by the acquisition unit (121) into vectors. The measurement unit (123) is configured to measure a distance between a meaning of a first character string and a meaning of a second character string, wherein the first and second character strings are converted into vectors by the vector conversion unit (122). The selection unit (124) is configured to select a skill based on the distance measured by the measurement unit (123). The execution unit (125) is configured to execute the skill selected by the selection unit (124).

**Fig. 1**

EP 4 546 158 A1

## Description

Technical Field

The present invention relates to an information processing device, an information processing method, and an information processing program.

Background Art

In recent years, the performance of natural language processing has greatly improved, leading to widespread use of chatbots in business.

Citation List

Non Patent Literature

Non Patent Literature 1: Nils Reimers and Iryna Gurevych, Sentence-BERT: Sentence Embeddings using Siamese BERT-Networks
Non Patent Literature 2: MATTHEW HENDERSON, et al., Efficient Natural Language Response Suggestion for Smart Reply

Summary of Invention

Technical Problem

However, the conventional technology has a challenge in which automatic selection of skills is not available. For example, the person using the skill needs to remember the correspondence between the skill calling and the content to be executed before calling the skill. Further, for example, it is difficult to explicitly distinguish between basic conversation and skill calling. Considering operations, it is burdensome to repeat learning every time a skill is added, and thus learning without a skill is required.

The present invention has been made to address the problems above, and an object thereof is to provide an information processing device, an information processing method, and an information processing program capable of enabling automatic skill selection.

Solution to Problem

To solve the problems above and achieve the objective, an information processing device of the present invention includes: an acquisition unit configured to acquire a first character string input by a user and a second character string indicating a skill; a vector conversion unit configured to convert the first character string and the second character string acquired by the acquisition unit into vectors; a measurement unit configured to measure a distance between a meaning of a first character string and a meaning of a second character string, wherein the first and second character strings are converted into vectors by the vector conversion unit; a selection unit configured to select a skill based on the distance measured by the measurement unit; and an execution unit configured to execute the skill selected by the selection unit.

Advantageous Effects of Invention

According to the present invention, it is possible to enable automatic skill selection.

Brief Description of Drawings

Fig. 1 is a block diagram illustrating one example of a configuration of an information processing device.
Fig. 2 is a diagram illustrating an overview of processing of the information processing device.
Fig. 3 is a diagram illustrating an overview of processing of the information processing device.
Fig. 4 is a diagram illustrating one example of processing results of the information processing device.

Fig. 5 is a flowchart illustrating one example of a processing flow of the information processing device.

Fig. 6 is a diagram illustrating one example of a computer that executes an information processing program.

Description of Embodiments

Hereinafter, an embodiment of an information processing device, an information processing method, and an information processing program according to the present application will be described in detail with reference to the drawings. Note that the present invention is not limited to the embodiment. Furthermore, the same elements are denoted by the same reference signs in the description of the drawings, and the overlapping description will be omitted.

[Summary of Present Invention]

The information processing device according to the present embodiment vectorizes meanings of an input character string and a character string indicating a skill and measures a distance between the vectors, thereby selecting a skill on the basis of the distance.

[Configuration of Information Processing Device]

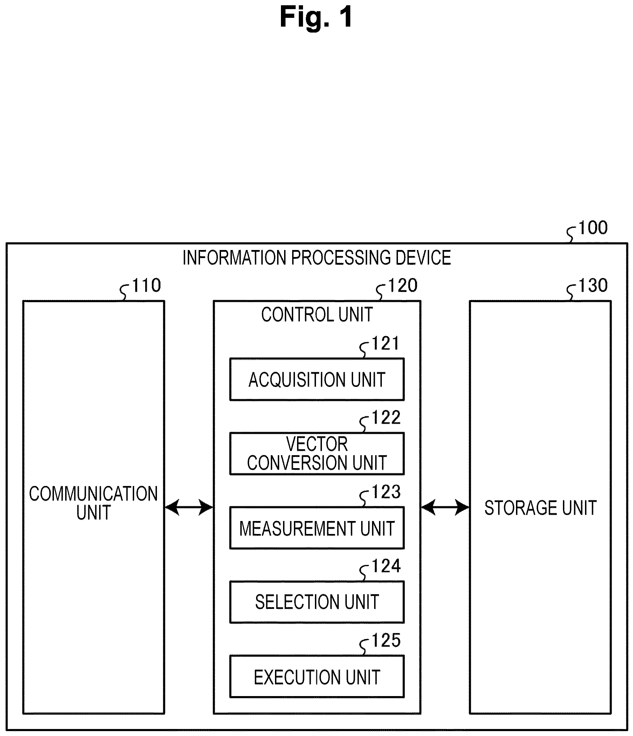

A configuration of an information processing device will be described with reference to Fig. 1. As illustrated in Fig. 1, an information processing device 100 includes a communication unit 110, a control unit 120, and a storage unit 130. Note that a plurality of devices may hold these units in a distributed manner. Hereinafter, processing of each of these units will be described.

The communication unit 110 is implemented by, for example, a network interface card (NIC) and enables communication between the control unit 120 and an external device via an electrical communication line such as a local area network (LAN) or the Internet. For example, the communication unit 110 enables communication between an external device and the control unit 120.

The storage unit 130 is implemented by a semiconductor memory element such as a random access memory (RAM) or a flash memory, or a storage device such as a hard disk or an optical disc. Information stored in the storage unit 130 includes, for example, data regarding a machine learning algorithm, a learning model, test data, a trained model, and other information required to select skills. Note that the information stored in the storage unit 130 is not limited to the information described above.

The control unit 120 is implemented by, for example, a central processing unit (CPU), a network processor (NP), or a field programmable gate array (FPGA), and executes a processing program stored in a memory. As illustrated in Fig. 1, the control unit 120 includes an acquisition unit 121, a vector conversion unit 122, a measurement unit 123, a selection unit 124, and an execution unit 125. Hereinafter, each unit included in the control unit 120 will be described.

The acquisition unit 121 acquires a first character string input by a user and a second character string indicating a skill. For example, the acquisition unit 121 acquires a set of character strings such as "Let's work!" as the first character string and a set of character strings indicating skills as the second character string (such as meeting list, meeting reservation, end of shift, contact information, start of shift, attendance, procurement, basic conversation and others).

The vector conversion unit 122 converts the first character string and the second character string acquired by the acquisition unit 121 into vectors. For example, the vector conversion unit 122 inputs the first character string and the second character string acquired by the acquisition unit 121 to Sentence Bert trained for the entire language as in Equations (1) and (2), and converts the first character string and the second character string into vectors.

[Math. 1]

$$\vec{h}_q = \text{SentenceBert}\left(\vec{x}_q\right)$$

... Equation (1)

[Math. 2]

$$\vec{h}_s = \text{SentenceBert}\left(\vec{x}_s\right)$$

... Equation (2)

The measurement unit 123 measures a distance between a meaning of the first character string and a meaning of the second character string, which have been converted into vectors by the vector conversion unit 122. For example, the measurement unit 123 measures a distance between a vector representing the meaning of the character string and a vector representing the meaning of a skill by measuring a distance between vectors as a cosine distance as in Equation (3).

[Math. 3]

$$d(\vec{h}_q, \vec{h}_s) = \frac{\vec{h}_q \cdot \vec{h}_s}{\|\vec{h}_q\| \|\vec{h}_s\|} \qquad \text{... Equation (3)}$$

The selection unit 124 selects a skill based on the distance measured by the measurement unit 123. For example, the selection unit 124 selects a skill "Start of Shift" based on the distance measured by the measurement unit 123. That is, the selection unit 124 measures a distance between the input character string and a set of character strings indicating the skill prepared in advance, and selects the closest skill. Furthermore, for example, in a case where the distance measured by the measurement unit 123 is larger than a predetermined value, the selection unit 124 selects a basic conversation.

The execution unit 125 executes the skill selected by the selection unit 124. For example, the execution unit 125 executes the skill "start of shift" selected by the selection unit 124.

[Outline of Processing]

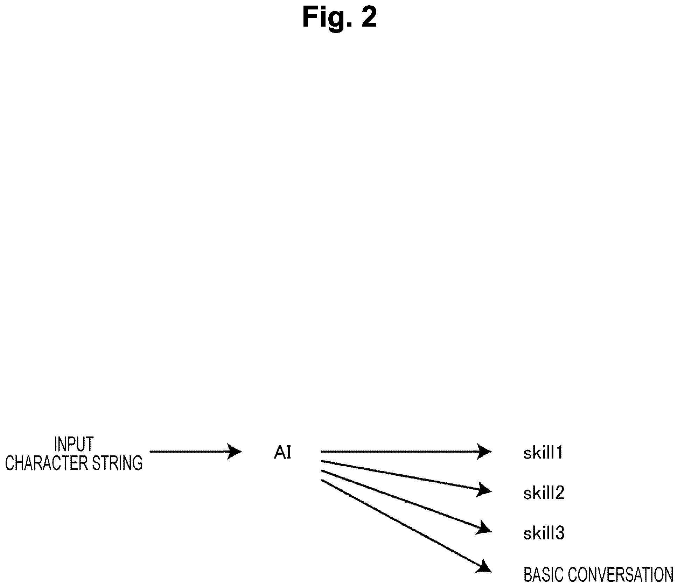

Next, an overview of processing of the information processing device 100 will be described with reference to Fig. 2. The information processing device 100 acquires a character string input by the user. The information processing device 100 then vectorizes the input character string and the character strings indicating skills, measures the distance, and selects a skill having the closest distance, thereby enabling automatic skill selection. At this time, the information processing device 100 selects a basic conversation if the distance between the vectorized character strings is larger than a predetermined threshold.

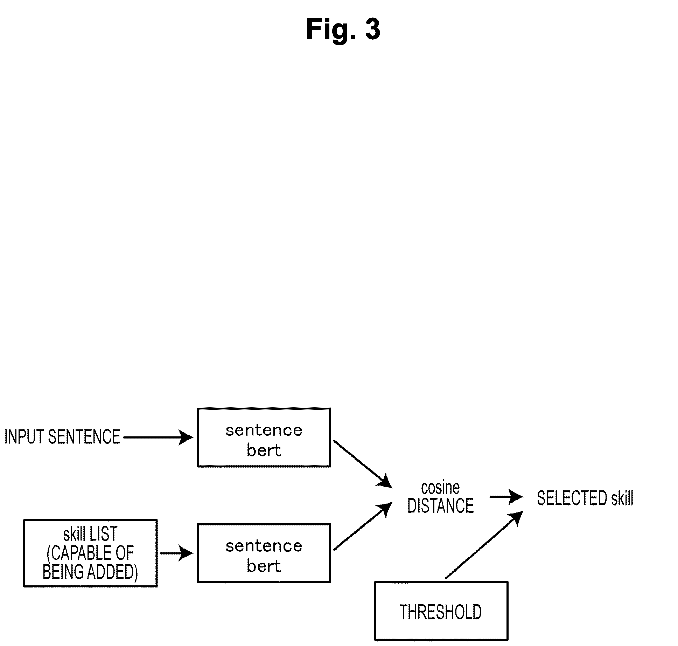

Next, overview of processing of the information processing device 100 will be described with reference to Fig. 3. The acquisition unit 121 acquires a first character string input by the user and a second character string indicating a skill. The vector conversion unit 122 then inputs the first character string (input sentence) and the second character string (skill list) acquired by the acquisition unit 121 to Sentence Bert trained for the entire language, and converts them into vectors.

The measurement unit 123 measures a distance between a vector representing the meaning of the character string and a vector representing the meaning of a skill by measuring a distance between vectors as a cosine distance. Subsequently, the selection unit 124 selects a skill based on the distance measured by the measurement unit 123. At this time, in a case where the distance measured by the measurement unit 123 is larger than a predetermined value, the selection unit 124 selects a basic conversation.

Hereinafter, an information addition phase and an operation phase of the information processing device 100 will be described.

In the information addition phase, the information processing device 100 learns by Sentence Bert for the entire language. The information processing device 100 then performs finetuning using the small number of input sentences and correct skills. The information processing device 100 determines the threshold so as to have the highest accuracy, including basic conversations.

Next, the operation phase will be described. The acquisition unit 121 acquires, for example, an input in slack by using api of a slack formula called bolt api. The vector conversion unit 122 passes the acquired input to Sentence Bert. The information processing device 100 also performs processing on the skill list in a similar manner. The selection unit 124 selects a skill using the method described above. The execution unit 125 executes the selected skill, and the execution result is returned to slack. For example, the information processing device 100 acquires a character string "Let's work!" input in slack and selects a skill "Start of Shift", thereby enabling punching into the internal system.

[Experiment]

An evaluation experiment of the information processing device 100 will be described. Evaluation experimental conditions are as follows.

As the Pretrain model, Bert trained by Wikipedia was adopted. Accuracy (0 to 1) of skill selection was used as a display axis. Eight skills were chosen as a dataset, including meeting list, meeting reservation, end of shift, contact information, start of shift, attendance, procurement, and basic conversation. The data set is divided into 231 pieces of learning data and 78 pieces of test data.

[Learning]

Finetuning was performed using three types of loss among Cos loss, Triplet loss, and Multiple negative ranking loss (MNR loss) with respect to the Pretrain model. Note that the evaluation was performed with a cosine distance, and the best threshold was adopted.

[Results]

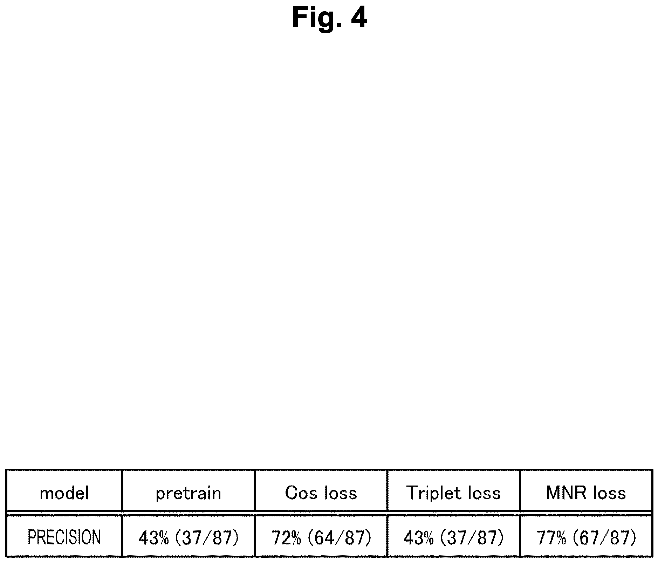

The accuracy of skill selection in test data is shown in Fig. 4. As illustrated in Fig. 4, it is confirmed that the method described above is sufficiently effective.

[Flowchart]

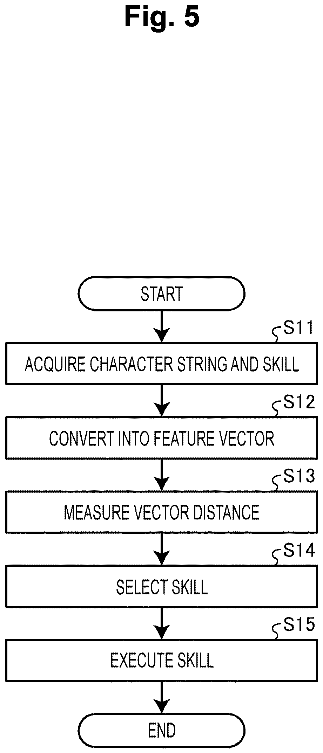

A processing flow performed by the information processing device 100 will be described using Fig. 5. Steps S11 to S15 below can be executed in different orders. A part of steps may be omitted among steps S11 to S15 below.
The acquisition unit 121 acquires a first character string input by the user and a second character string indicating a skill (step S11). For example, the acquisition unit 121 acquires a set of character strings such as "Let's work!" as the first character string and a set of character strings indicating skills as the second character string (such as meeting list, meeting reservation, end of shift, contact information, start of shift, attendance, procurement, basic conversation and others).
The vector conversion unit 122 converts the character string and skill acquired by the acquisition unit 121 into vectors (step S12). For example, the vector conversion unit 122 inputs the first character string and the second character string acquired by the acquisition unit 121 to Sentence Bert trained for the entire language, and converts the first character string and the second character string into vectors.
The measurement unit 123 measures a distance between the vectors converted by the vector conversion unit 122 (step S13). For example, the measurement unit 123 measures a distance between a vector representing the meaning of the character string and a vector representing the meaning of a skill by measuring a distance between vectors as a cosine distance.
The selection unit 225 selects a skill based on the distance measured by the measurement unit 224 (step S14). For example, the selection unit 124 selects a skill "Start of Shift" based on the distance measured by the measurement unit 123.
The execution unit 125 executes the skill selected by the selection unit 124 (step S15). For example, the execution unit 125 executes the skill "start of shift" selected by the selection unit 124.

[Effects]

The information processing device 100 according to the present embodiment includes an acquisition unit 121, a vector conversion unit 122, a measurement unit 123, a selection unit 124, and an execution unit 125. The acquisition unit 121 acquires a first character string input by a user and a second character string indicating a skill. The vector conversion unit 122 converts the first character string and the second character string acquired by the acquisition unit 121 into vectors. The measurement unit 123 measures a distance between a meaning of the first character string and a meaning of the second character string, which have been converted into vectors by the vector conversion unit 122. The selection unit 124 selects a skill based on the distance measured by the measurement unit 123. The execution unit 125 executes the skill selected by the selection unit 124.
Accordingly, the information processing device 100 measures the distance between the meaning of the character string input by the user and the meaning of the skill, and selects the skill on the basis of the measured distance, thereby enabling automatic skill selection. That is, the information processing device 100 enables automatic skill selection using the distance between the feature vectors, thereby reducing a burden on a person who should select a skill.
In the information processing device 100 according to the present embodiment, the measurement unit 123 measures a distance between a meaning of the first character string and a meaning of the second character string, which are converted into vectors, by means of a cosine distance. Accordingly, the information processing device 100 calculates the distance between the meaning of the character string and the meaning of the skill using the cosine distance, and selects the skill, thereby enabling automatic skill selection.
In the information processing device 100 according to the present embodiment, the selection unit 124 is configured to select a basic conversation in a case where the distance measured by the measurement unit 123 is larger than a predetermined threshold. Accordingly, in a case where a character string input is not close to any of the skills, the information processing device 100 can enable automatic determination by selecting a basic conversation without explicitly distinguishing the conversation and the skill.

[System Configuration and Others]

Further, each of the components of each of the devices illustrated in the drawings is functionally conceptual, and is not required to be physically designed as illustrated. In other words, a specific form of distribution and integration of each device is not limited to the illustrated aspect, and all or part thereof can be functionally or physically distributed and integrated in any unit according to various loads, usage conditions, and other factors. For example, furthermore, all or any part of the processing functions performed in each device can be implemented by a CPU and a program analyzed and executed by the CPU or can be implemented as hardware by wired logic.

Furthermore, among the processing described in the present example, all or part of the processing described as being automatically performed can be manually performed, or all or part of the processing described as being manually performed can be automatically performed by a known method. The processing procedures, control procedures, specific names, and information including various types of data and parameters described above in the specification and drawings can be optionally modified unless otherwise mentioned.

[Program]

It is also possible to create a program in which the processing to be executed by the information processing device 100 described in the embodiments above is described in a language executable by a computer. In this case, the computer executes the program, and thus effects similar to those of the embodiments above can be obtained. Further, such a program may be recorded in a computer-readable recording medium, and the program recorded in the recording medium may be read and executed by a computer to implement processing similar to the above-described embodiment.

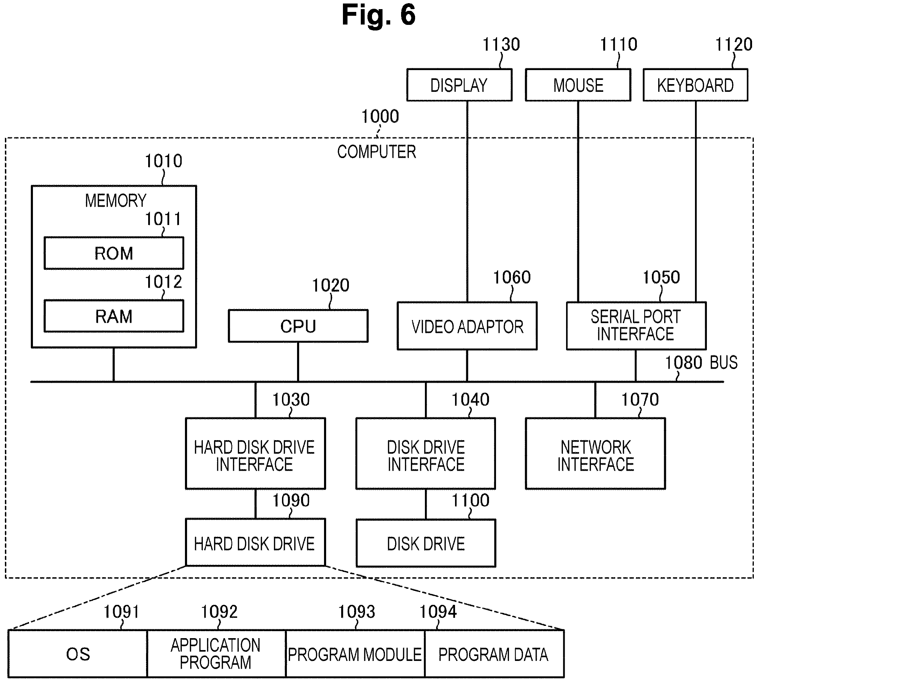

Fig. 6 is a diagram illustrating an example of the computer that executes the information processing program. As illustrated in Fig. 6, a computer 1000 includes, for example, a memory 1010, a CPU 1020, a hard disk drive interface 1030, a disk drive interface 1040, a serial port interface 1050, a video adapter 1060, and a network interface 1070. These units are connected by a bus 1080.

The memory 1010 includes a read only memory (ROM) 1011 and a RAM 1012. The ROM 1011 stores, for example, a boot program such as a basic input output system (BIOS). The hard disk drive interface 1030 is connected to a hard disk drive 1090. The disk drive interface 1040 is connected to a disk drive 1100. For example, a removable storage medium such as a magnetic disk or an optical disc is inserted into the disk drive 1100. For example, the serial port interface 1050 is connected to a mouse 1110 and a keyboard 1120. For example, a display 1130 is connected to the video adapter 1060.

As illustrated in Fig. 6, the hard disk drive 1090 stores, for example, an OS 1091, an application program 1092, a program module 1093, and program data 1094. Each table described in the above embodiment is stored in, for example, the hard disk drive 1090 or the memory 1010.

Furthermore, the information processing program is stored in the hard disk drive 1090 as, for example, the program module including description of commands executable by the computer 1000. Specifically, the program module 1093 in which each processing executed by the computer 1000 described in the embodiment above is described is stored in the hard disk drive 1090.

Data used for information processing performed by the information processing program is stored in, for example, the hard disk drive 1090 as the program data. Then, the CPU 1020 reads the program module 1093 and the program data 1094 stored in the hard disk drive 1090 to the RAM 1012 as necessary and executes each procedure described above.

The program module 1093 and the program data 1094 related to the information processing program are not limited to being stored in the hard disk drive 1090, and may be stored in, for example, a removable storage medium and read by the CPU 1020 via the disk drive 1100. Alternatively, the program module 1093 and the program data 1094 related to the control program may be stored in another computer connected via a network such as a local area network (LAN) or a wide area network (WAN) and may be read by the CPU 1020 via the network interface 1070.

[Others]

Although various embodiments have been described in detail in the present specification with reference to the drawings, those embodiments are merely examples and are not intended to limit the present invention thereto. The features described herein may be achieved by various methods, including various modifications and improvements based on the knowledge of those skilled in the art.

In addition, the "unit (module, or wording with a suffix -er or -or)" described above can be read as, for example, a unit, means or circuit. For example, a communication module, a control module, and a storage module may be interchangeable with a communication unit, a control unit, and a storage unit, respectively.

Reference Signs List

100    Information processing device

110    Communication unit
120    Control unit
121    Acquisition unit
122    Vector conversion unit
123    Measurement unit
124    Selection unit
125    Execution unit
130    Storage unit

**Claims**

1.  An information processing device comprising:

    an acquisition unit configured to acquire a first character string input by a user and a second character string indicating a skill;
    a vector conversion unit configured to convert the first character string and the second character string acquired by the acquisition unit into vectors;
    a measurement unit configured to measure a distance between a meaning of a first character string and a meaning of a second character string, wherein the first and second character strings are converted into vectors by the vector conversion unit;
    a selection unit configured to select a skill based on the distance measured by the measurement unit; and
    an execution unit configured to execute the skill selected by the selection unit.

2.  The information processing device according to claim 1, wherein the measurement unit is configured to measure a distance between a meaning of a first character string and a meaning of a second character string, which are converted into vectors, by means of a cosine distance.

3.  The information processing device according to claim 1, wherein the selection unit is configured to select a basic conversation in a case where the distance measured by the measurement unit is larger than a predetermined threshold.

4.  An information processing method executed by a computer, the information processing method comprising:

    an acquisition step of acquiring a first character string input by a user and a second character string indicating a skill;
    a vector conversion step of converting the first character string and the second character string acquired in the acquisition step into vectors;
    a measurement step of measuring a distance between a meaning of a first character string and a meaning of a second character string, wherein the first and second character strings are converted into vectors in the vector conversion step;
    a selection step of selecting a skill based on the distance measured in the measurement step; and
    an execution step of executing the skill selected in the selection step.

5.  An information processing program that causes a computer to execute:

    an acquisition step of acquiring a first character string input by a user and a second character string indicating a skill;
    a vector conversion step of converting the first character string and the second character string acquired in the acquisition step into vectors;
    a measurement step of measuring a distance between a meaning of a first character string and a meaning of a second character string, wherein the first and second character strings are converted into vectors in the vector conversion step;
    a selection step of selecting a skill based on the distance measured in the measurement step; and
    an execution step of executing the skill selected in the selection step.

# Fig. 1

INFORMATION PROCESSING DEVICE ⌐100

COMMUNICATION UNIT ⌐110

CONTROL UNIT ⌐120

ACQUISITION UNIT ⌐121

VECTOR CONVERSION UNIT ⌐122

MEASUREMENT UNIT ⌐123

SELECTION UNIT ⌐124

EXECUTION UNIT ⌐125

STORAGE UNIT ⌐130

# Fig. 2

INPUT CHARACTER STRING $\longrightarrow$ AI $\longrightarrow$ skill1

skill2

skill3

BASIC CONVERSATION

# Fig. 3

INPUT SENTENCE ⟶ sentence bert

skill LIST (CAPABLE OF BEING ADDED) ⟶ sentence bert

cosine DISTANCE ⟶ SELECTED skill

THRESHOLD

# Fig. 4

| model | pretrain | Cos loss | Triplet loss | MNR loss |
|---|---|---|---|---|
| PRECISION | 43% (37/87) | 72% (64/87) | 43% (37/87) | 77% (67/87) |

# Fig. 5

```
          ┌─────────────┐
          │    START    │
          └──────┬──────┘
                 │          ⌐S11
          ┌──────▼────────────────────────┐
          │ ACQUIRE CHARACTER STRING AND SKILL │
          └──────┬────────────────────────┘
                 │          ⌐S12
          ┌──────▼────────────────────────┐
          │   CONVERT INTO FEATURE VECTOR  │
          └──────┬────────────────────────┘
                 │          ⌐S13
          ┌──────▼────────────────────────┐
          │    MEASURE VECTOR DISTANCE     │
          └──────┬────────────────────────┘
                 │          ⌐S14
          ┌──────▼────────────────────────┐
          │          SELECT SKILL          │
          └──────┬────────────────────────┘
                 │          ⌐S15
          ┌──────▼────────────────────────┐
          │         EXECUTE SKILL          │
          └──────┬────────────────────────┘
                 │
          ┌──────▼──────┐
          │     END     │
          └─────────────┘
```

EP 4 546 158 A1

**Fig. 6**

# EP 4 546 158 A1

| | INTERNATIONAL SEARCH REPORT | International application No. |
|---|---|---|
| | | **PCT/JP2022/028113** |

**A. CLASSIFICATION OF SUBJECT MATTER**

*G06F 16/33*(2019.01)i
FI: G06F16/33

According to International Patent Classification (IPC) or to both national classification and IPC

**B. FIELDS SEARCHED**

Minimum documentation searched (classification system followed by classification symbols)

G06F 16/30 - 16/387

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-509626 A (NOKIA CORPORATION) 30 March 2015 (2015-03-30)<br>paragraphs [0061]-[0073], fig. 3a-3c | 1-5 |
| X | JP 2015-509627 A (NOKIA CORPORATION) 30 March 2015 (2015-03-30)<br>paragraphs [0049]-[0060], fig. 3a-3c | 1-5 |
| X | US 2015/0100523 A1 (NOKIA CORPORATION) 09 April 2015 (2015-04-09)<br>paragraphs [0148]-[0162], fig. 3a-3c | 1-5 |
| A | JP 2021-136027 A (FUJITSU LTD) 13 September 2021 (2021-09-13)<br>paragraphs [0038], [0146]-[0147] | 1-5 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 September 2022** | **11 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/028113**

| Patent document cited in search report | | | Publication date (day/month/year) | Patent family member(s) | | | Publication date (day/month/year) |
|---|---|---|---|---|---|---|---|
| JP | 2015-509626 | A | 30 March 2015 | US<br>paragraphs [0084]-[0095], fig.<br>3a-3c<br>WO<br>EP<br>CN | 2015/0178337<br><br><br>2013/124519<br>2817738<br>104246757 | A1<br><br><br>A1<br>A1<br>A | |
| JP | 2015-509627 | A | 30 March 2015 | US<br>paragraphs [0069]-[0080], fig.<br>3a-3c<br>WO<br>EP<br>CN | 2015/0178378<br><br><br>2013/124520<br>2817737<br>104246758 | A1<br><br><br>A1<br>A1<br>A | |
| US | 2015/0100523 | A1 | 09 April 2015 | WO<br>p. 18, line 34 to p. 22, line 15,<br>fig. 3a-3c<br>EP<br>CN | 2013/124522<br><br><br>2817739<br>104246756 | A1<br><br><br>A1<br>A | |
| JP | 2021-136027 | A | 13 September 2021 | US<br>paragraphs [0038], [0146]-<br>[0147] | 2021/0264115 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MATTHEW HENDERSON et al.** *Efficient Natural Language Response Suggestion for Smart Reply*